# EUROPÄISCHE PATENTSCHRIFT

(11) **EP 0 381 204 B1**
(45) Veröffentlichungstag und Bekanntmachung des Hinweises auf die Patenterteilung: **18.11.1993**
(21) Anmeldenummer: 90101950.5
(22) Anmeldetag: 01.02.1990
(51) Int. Cl.: C08G 77/08, C01B 21/097

(54) **Phosphornitridchloride enthaltende Zusammensetzungen**
Compositions containing phosphoronitride chloride
Compositions contenant du chlorure de phosporonitrile

(30) Priorität: 02.02.1989 DE 3903137
(43) Veröffentlichungstag der Anmeldung: 08.08.1990
(73) Patentinhaber: WACKER-CHEMIE GMBH, D-81737 München (DE)
(72) Erfinder: Schuster, Johann, Dr., D-8261 Emmerting (DE); Schneider, Otto, Dr., D-8263 Burghausen (DE); Piehler, Martin, D-8261 Mehring (DE); Müller, Horst, Dr., D-8261 Emmerting (DE)

(56) Entgegenhaltungen:
- US-A- 3 398 176
- US-A- 3 652 711
- "Ullmanns Encyklopädie der technischen Chemie", Auflage 3, Band 16, 1965, Seiten 724,725,726,729,741, Urban & Schwarzenberg, München, DE
- PATENT ABSTRACTS OF JAPAN, vol. 6, no. 158 (C-120)[1036], 19. August 1982, Seite 64 C 120; & JP-A-57 77 012
- Gmelins Handbuch der anorganischen Chemie, Band Phosphor, Teil C, Systemnummer 16, Verlag Chemie 1965, Seite 556-557

## Beschreibung

Die vorliegende Erfindung betrifft Zusammensetzungen, die Phosphornitridchloride, halogenfreie organische Lösungsmittel, als Lösungsvermittler Tenside und gegebenenfalls geringe Mengen an Wasser enthalten. Diese Zusammensetzungen sind dazu geeignet, die Kondensation und/oder Äquilibrierung von Organo(poly)siloxanen zu beschleunigen.

### Stand der Technik

Die Herstellung von Phosphornitridchloriden, die durch Umsetzung von zwei Mol Phosphorpentachlorid mit einem Mol Ammoniumchlorid erhältlich sind, und deren Verwendung zur Beschleunigung der Kondensation und/oder Äquilibrierung von Organo(poly)siloxanen ist aus der US-A 3,839,388 bekannt. Diese Phosphornitridchloride werden in Halogenkohlenwasserstoffen hergestellt und sind darin gut löslich; jedoch ist deren Löslichkeit in halogenfreien Lösungsmitteln sehr gering.

### Aufgabe

Aufgabe der vorliegenden Erfindung war es, Zusammensetzungen von Phosphornitridchloriden bereitzustellen, welche keine oder nur in geringem Umfang Halogenkohlenwasserstoffe enthalten. Des weiteren war es Aufgabe der vorliegenden Erfindung, Phosphornitridchloride enthaltende flüssige Zusammensetzungen bereitzustellen, welche klar sind und in denen die Phosphornitridchloride weitgehend stabil gegenüber Hydrolyse sind.

### Beschreibung

Der in der Beschreibung und den Patentansprüchen verwendete Begriff Organosiloxane schließt auch Organopolysiloxane ein.

Die vorstehenden Aufgaben werden durch die vorliegende Erfindung gelöst durch Zusammensetzungen enthaltend durch Umsetzung von zwei Mol Phosphorpentachlorid mit einem Mol Ammoniumchlorid erhältliche Phosphornitridchloride, die dadurch gekennzeichnet sind, daß sie als Lösungsmittel zumindestens 95 %, jeweils bezogen auf das Gewicht der Lösungsmittel, halogenfreie organische Lösungsmittel, als Lösungsvermittler Tenside, die ausgewählt werden aus quarternären Ammoniumverbindungen, in denen das Stickstoffatom der Ammoniumgruppe an Alkyl-, Alkaryl-, Alkylenhydroxy-, Alkylenalkoxy- und Alkylenaminogruppen mit jeweils bis zu 24 C-Atomen gebunden ist, Sulfonaten, Sulfaten, Phosphonaten und Phosphaten, und gegebenenfalls geringe Mengen an Wasser enthalten.

Der Begriff halogenfreies organisches Lösungsmittel schließt jeweils auch Gemische von organischen Lösungsmitteln - nachstehend kurz Lösungsmittelgemische genannt - ein. Bevorzugt als organische Lösungsmittel sind solche, die nicht mit Phosphornitridchloriden unter Herabsetzung derer die Kondensation und/oder Äquilibrierung beschleunigenden Wirkung reagieren. Sofern nachstehend der Begriff Lösungsmittel verwendet wird, so ist darunter jeweils organisches Lösungsmittel zu verstehen. Lösungsmittel oder Lösungsmittelgemische mit einem Siedepunkt bzw. Siedebereich von bis zu 160 °C. insbesondere von bis zu 120 °C bei jeweils 0,1 MPa (abs.) sind bevorzugt.

Beispiele für Lösungsmittel sind Alkohole, wie Methanol, Ethanol, n-Propanol, iso-Propanol; Ether, wie Dioxan, Tetrahydrofuran, Diethylether, Diethylenglycoldimethylether; Ester, wie Methylacetat, Ethylacetat, n- und iso-Propylacetat, Butylacetat, Diethylcarbonat und Ethylformiat; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methylisobutylketon; Schwefelkohlenstoff, Acetontril, Dimethylformamid oder Gemische dieser Lösungsmittel.

Zu den weniger bevorzugten Lösungsmitteln zählen die oben genannten Alkohole, Ketone, Dimethylformamid, Schwefelkohlenstoff und Acetonitril.

Als Lösungsmittel ist insbesondere wegen seiner geringen Toxizität und seiner leichten Zugänglichkeit C₁- bis C₃-Alkylacetat, speziell Ethylacetat bevorzugt. Erstaunlicherweise ist Ethylacetat in den erfindungsgemäßen Zusammensetzungen gegenüber der erwarteten, durch Phosphornitridchlorid katalysierten Esterverseifung weitgehend stabil.

An sich werden Tenside eingesetzt, um geringe Mengen einer wasserunlöslichen Verbindung mit einer wäßrigen Phase zu vermischen. Der Gebrauch von Tensiden in organischen Phasen zur Lösung von polaren Substanzen ist jedoch ungewöhnlich.

Als Sulfonate sind bevorzugt Alkylbenzolsulfonate, Alkylnaphthalinsulfonate, Alkansulfonate, Olefinsulfonate, α-Sulfofettsäureester, sulfobernsteinsäurealkylester, Alkoxy-, Acyloxy- und Acylaminoalkansulfonate, deren Kohlenwasserstoffkette jeweils bis zu 30 C-Atome besitzt.

Als Sulfate sind bevorzugt primäre und sekundäre Alkylsulfate und Salze der Schwefelsäurehalbester von Alkyl- oder Alkylaryloligoglycolethern, deren Alkylkette jeweils bis zu 24 C-Atome besitzt.

Als Phosphonate und Phosphate sind bevorzugt Alkali und/oder Ammoniumsalze dieser Verbindungen, welche Alkyl- und/oder Alkarylgruppen mit bis zu 24 C-Atomen aufweisen.

Besonders bevorzugt als Lösungsvermittler sind Alkalimetall- oder Ammonium-(C₆- bis C₂₄-)alkylsulfat und/oder (C₆- bis C₂₄-)Alkylammoniumhalogenid bzw. die entsprechenden Säuren der genanten Alkalimetall- bzw. Ammoniumsalze, speziell Natriumdodecylsulfat und Ammoniumdodecylsulfat oder Dodecylsulfonsäure.

Erstaunlicherweise schadet die Anwesenheit von geringen Mengen an Wasser nicht in den erfindungsgemäßen Zusammensetzungen. Es können also beispielsweise wässrige Lösungen von Tensiden zur Bereitung der erfindungsgemäßen Zusammensetzungen eingesetzt werden. Desgleichen dürfen die halogenfreien Lösungsmittel, welche zur Herstellung der erfindungsgemäßen Zusammensetzungen verwendet werden, auch geringe Mengen an Wasser enthalten. Solche geringe Mengen an Wasser sind sogar Vorzugsweise bei der erfindungsgemäßen Zubereitung der Zusammensetzungen anwesend, und zwar insbesondere von 0,1 Gew.% bis 5 Gew.%, speziell von 0,5 Gew.% bis 4 Gew.%, jeweils bezogen auf das Gesamtgewicht der erfindungsgemäßen Zusammensetzungen.

Vorzugsweise enthalten die erfindungsgemäßen Zusammensetzungen, jeweils bezogen auf die Summe der Gewichte von Phosphornitridchlorid, Lösungsmittel und Lösungsvermittler a)von 0,01 % bis 80 %, insbesondere von 0,05 % bis 50 %, speziell von 0,1 % bis 30 % an Phosphornitridchlorid(en); b)von 0,01 % bis 20 %, insbesondere von 0,1 % bis 10 %, speziell von 0,3 % bis 5 % an Lösungsvermittler(n); c)mindestens 15 %, insbesondere mindestens 50 %, speziell von 70 % bis 99,8 % an Lösungsmittel(n).

Im allgemeinen genügt eine Menge von 0,1 Gew.% bis 4 Gew.% an Lösungsvermittler bezogen auf das Gewicht von eingesetztem Phosphornitridchlorid. Eine höhere Menge an Tensid ist möglich, bringt aber keine weiteren Vorteile. Die Menge an Lösungsmittel kann relativ gering sein, wenn die Zusammensetzung als Konzentrat zwischengelagert werden soll und vor ihrem Einsatz weiter verdünnt wird.

Das in den erfindungsgemäßen Zusammensetzungen verwendete organische Lösungsmittel ist vorzugswiese bis auf durch seine Herstellung bedingte Verunreinigungen frei von halogenhaltigen organischen Lösungsmitteln. Als halogenhaltige organische Lösungsmittel, die in den erfindungsgemäßen Zusammensetzungen vorzugsweise nur in geringem Umfang bzw. gar nicht eingesetzt werden, sind in diesem Zusammenhang alle Lösungsmittel zu rechnen, die sowohl Kohlenstoffatome als auch Halogenatome aufweisen, also auch z.B. Tetrachlormethan.

Zur Herstellung der erfindungsgemäßen Zusammensetzungen können die Komponenten - Phosphornitrilchlorid(e), Lösungsvermittler und Lösungsmittel - in beliebiger Reihenfolge miteinander vereint werden. Es kann beispielsweise das Lösungsmittel(gemisch) mit Lösungsvermittler, also vorzugsweise Tensid(en) und anschließend mit festem Phosphornitridchlorid versetzt werden. Es können auch Phosphornitridkristalle mit Lösungsmittel vermischt werden und dieser Mischung anschließend der Lösungsvermittler zugegeben werden. Vorzugsweise werden zuerst Lösungsvermittler und Lösungsmittel miteinander vermischt und dieser Mischung anschließend Phosphornitridchlorid zugegeben. Vorzugsweise wird Lösungsvermittler in Form von wässriger Losung zugegeben.

Die erfindungsgemäßen Zusammensetzungen sind klar. Es wird deshalb angenommen, daß es sich um Lösungen oder Mikrodispersionen handelt.

Gegenüber den bekannten Lösungen von Phosphornitridchloriden in Halogenkohlenwasserstoffen weisen die erfindungsgemäßen Zusammensetzungen eine deutlich erhöhte Stabilität gegen Hydrolyse des Phosphornitridchlorids auf

Die erfindungsgemäßen Zusammensetzungen eignen sich hervorragend als Katalysatorkomponenten zur Kondensation und/oder Äquilibrierung von Organo(poly)siloxan.

Als Organo(poly)siloxane können auch bei dem erfindungsgemäßen Verfahren beliebige Organo(poly)siloxane mit Si-gebundenen Hydroxylgruppen eingesetzt werden, die bei den bisher bekannten Verfahren zum Kondensieren und/oder Äquilibrieren von Organo(poly)siloxanen mit Si-gebundenen Hydroxylgruppen in Gegenwart eines Phosphor, Stickstoff und Chlor enthaltenden Katalysators eingesetzt werden konnten.

Beispiele für solche Organo(poly)siloxane mit Si-gebundenen Hydroxylgruppen sind insbesondere solche der Formel

HO(SiR₂O)ₙH,

worin R gleiche oder verschiedene, einwertige, SiC-gebundene organische Reste oder Wasserstoff bedeutet mit der Maßgabe, daß an jedes Siliciumatom, an das Wasserstoff unmittelbar gebunden ist, auch ein einwertiger, SiC-gebundener organischer Rest gebunden ist, und n eine ganze Zahl im Wert von mindestens 1, vorzugsweise mindestens 2, ist.

Obwohl durch die obige, häufig verwendete Formel nicht dargestellt, können bis zu insgesamt 5 Molprozent der Einheiten der Formel SiR₂O durch andere, meist jedoch lediglich als mehr oder weniger schwer vermeidbare Verunreinigungen vorliegende Siloxaneinheiten, wie solche der Formel RSiO_{3/2}, R₃SiO_{1/2}, wobei R jeweils die oben dafür angegebene Bedeutung hat, oder SiO_{4/2} oder Gemische aus mindestens zwei solcher anderen Siloxan-Einheiten ersetzt sein.

Bei dem erfindungsgemäßen Verfahren kann eine Art von Organo(poly)siloxan mit Si-gebundenen Hydroxylgruppen eingesetzt werden. Es können aber auch Mischungen aus mindestens zwei verschiedenen Arten derartiger Organo(poly)siloxane eingesetzt werden.

Anstelle von Organo(poly)siloxanen mit Si-gebundenen Hydroxylgruppen oder im Gemisch mit derartigen Organo(poly)siloxanen können aber cyclische auch Organopolysiloxane, insbesondere solche der Formel

(R₂SiO)ₘ ,

worin R die oben dafür angegebene Bedeutung hat und m eine ganze Zahl im wert von 3 bis 12, insbesondere 4 bis 8, besonders bevorzugt 4, ist, bei dem erfindungsgemäßen Verfahren eingesetzt werden.

Vorzugsweise enthalten die SiC-gebundenen organischen Reste in den bei dem erfindungsgemäßen Verfahren eingesetzten Organo(poly)siloxanen und damit auch die organischen Reste R in den oben angegebenen Formeln höchstens 18 Kohlenstoffatome je Rest. Beispiele für derartige Reste sind Kohlenwasserstoffreste, wie Alkylreste, z.B. der Methyl-, Ethyl-, n-Propyl-, Isopropyl-, n-Butyl- und sec.-Butylrest sowie Octadecylreste; Kohlenwasserstoffreste mit aliphatischer Mehrfachbindung, z.B. der Vinyl- und Allylrest; Arylreste, z.B. der Phenylrest und Xenylreste; Alkarylreste, z.B. Tolylreste; und Aralkylreste, z.B. der Benzylrest. Diese Kohlenwasserstoffreste können unter den Reaktionsbedingungen gegenüber Wasser und dem erfindungsgemäß verwendeten Katalysator inerte Substituenten aufweisen. Weitere Beispiele für einwertige, SiC-gebundene organische Reste in den bei dem erfindungsgemäßen Verfahren eingesetzten Organo(poly)siloxanen und damit auch für organische Reste R in den oben angegebenen Formeln sind somit einwertige, halogenierte Kohlenwasserstoffreste, wie Halogenalkylreste, z.B. der 3,3,3-Trifluorpropylrest, und Halogenarylreste, z.B. der o-, p-oder m-Chlorphenylrest; aus Kohlenstoff-, Wasserstoff-, Ethersauerstoff- und Fluoratome(n) aufgebaute, einwertige aliphatische Reste, z.B. der 1,1,2,2,3,3-Hexafluorpropyloxypropylrest und der 1,1,2,2-Tetrafluorethoxypropylrest, und Acyloxyalkylreste, wie der gamma-Acryloxypropylrest und gamma-Methacryloxypropylrest.

Schon wegen der leichteren Zugänglichkeit sind jedoch vorzugsweise mindestens 80 % der Anzahl der organischen Reste in in den bei dem erfindungsgemäßen Verfahren eingesetzten Organo(poly)siloxanen und damit auch der organischen Reste R in den oben angegebenen Formeln Methylreste.

Die Kondensation und/oder Äquilibrierung von Organo(poly)siloxan wird vorzugsweise bei 100° bis 200°C durchgeführt.

Um die Abführung des bei der Kondensation gebildeten Wassers zu erleichtern, wird das Kondensieren und/oder Äquilibrieren der Organo(poly)siloxane vorzugsweise bei einem Druck unterhalb 800 hPa (abs.) durchgeführt. Das Kondensieren, insbesondere aber das Äquilibrieren, ist aber auch bei höheren Drücken durchführbar.

Nach dem Kondensieren und/oder Äquilibrieren der Organo-(poly)siloxane kann der erfindungsgemäß verwendete Katalysator bzw. ein Umsetzungsprodukt, welches aus diesem Katalysator durch Umsetzung mit zu kondensierendem und/oder zu äquilibrierendem Organo(poly)siloxan gebildet wurde und ebenfalls das Kondensieren und/oder Äquilibrieren von Organo(poly)siloxanen fördert, durch Zugabe von z.B. Triisononylamin, n-Butyllithium oder Hexamethyldisilazan unwirksam gemacht werden, um die bei dem erfindungsgemäßen Verfahren erhaltenen Organopolysiloxane gegenüber Viskositätsänderungen zu stabilisieren.

Die erfindungsgemäß hergestellten, linearen Organopolysiloxane können für alle Zwecke verwendet werden, bei denen auch die nach bisher bekannten Verfahren durch Kondensieren und/oder Äquilibrieren von Organo(poly)siloxanen erzeugten, linearen Organopolysiloxane eingesetzt werden konnten, z.B. als Fadengleitmittel, zur Herstellung von Organopolysiloxanelastomeren, wobei die Vernetzung je nach Art der endständigen Einheiten der linearen Organopolysiloxane durch Kondensation, Anlagerung von Si-gebundenem Wasserstoff an z.B. SiC-gebundene Vinylgruppen oder durch Radikalbildung erfolgen kann, und zur Herstellung von klebrige Stoffe abweisenden Überzügen.

In dem oben geschilderten Verfahren werden die erfindungsgemäßen Zusammensetzungen vorzugsweise in Mengen an Phosphornitridchlorid von 1 ppm bis 1000 ppm, insbesondere von 2 ppm bis 200 ppm, jeweils bezogen auf das Gesamtgewicht der Organo(poly)siloxane eingesetzt.

In den nachfolgenden Beispielen sind, falls jeweils nicht anders angegeben,
a) alle Mengenangaben auf das Gewicht bezogen;
b)alle Drücke 0,10 MPa (abs.);
c)alle Temperaturen 20° C .

### Beispiele

### A. Herstellung von Phosphornitridchlorid

Phosphornitridchlorid wurde gemäß US-A-3 839 388 (S. Nitzsche et al., Wacker-Chemie GmbH) durch Umsetzung von 2 Mol Phosphorpentachlorid mit einem Mol Ammoniumchlorid bis zum Aufhören der Chlorwasserstoffentwicklung hergestellt.

### B. Herstellung der erfindungsgemäßen Zusammensetzungen

### 1. Konzentrate

### 1.1

In einem Kolben mit Rührer wurden zu 600 ml Ethylacetat 2,9 g Ammoniumlaurylsulfat als 35 Gew.%ige wässrige Lösung unter Rühren zugegeben, die Mischung anschließend mit 72 g festem,gemäß A. hergestellten, feinkristallinen Phosphornitridchlorid versetzt und ca. eine halbe Stunde bei Raumtemperatur gerührt. Die so erhaltene Lösung wurde anschließend filtriert.

### 1.2

Die Herstellungsweise gemäß 1.1 wurde wiederholt, mit der Ausnahme, daß zuerst das Lösungsmittel zu dem bei der Herstellung des Phosphornitridchlorids anfallenden Kristallbrei unter Rühren zugesetzt und anschließend das Tensid zugegeben wurde. Nach anschließendem Rühren (5 bis 30 min, je nach Ruhrgeschwindigkeit) wurde nach Filtration eine klare aktive Lösung erhalten.

### 2. Gebrauchsfertige Lösungen

Zum direkten Einsatz in technischen Verfahren wurden die Konzentrate gemäß 1.1 und 1.2 mit Ethylacetat oder α,ω-bis-Trimethylsiloxypolydimethylsiloxan auf einen Gehalt an Phosphornitridchlorid von 0,2 bis 3 Gew.% verdünnt.

### C. Verwendungsbeispiele der erfindungsgemäßen Zusammensetzungen.

### 1. Kondensation

In einem Schneckenreaktor wurden kontinuierlich 1500 kg/h α,ω-Dihydroxypolydimethylsiloxan mit einer Viskosität von ca. 120 mPa*s bei 23 °C und 1000 ml/h einer 0,45 Gew.%igen Lösung an Phosphornitridchlorid in Ethylacetat, welche 0,018 Gew.% Ammoniumlaurylsulfat enthielt, dosiert. Die Reaktionstemperatur betrug 160 °C, der Druck 6 kPa. Nach einer mittleren Verweilzeit von ca. 2 min wurde der Katalysator durch die kontinuierliche Zufuhr von 35 ml/h Triisononylamin desaktiviert. Man erhielt ein α,ω-bis-Hydroxypolydimethylsiloxan einer Viskosität von 350 000 mPa*s bei 23 °C. Das so hergestellte Polymer war klar und geruchlos.

### 2. Äquilibrierung

In einen Schneckenkneter wurden kontinuierlich 600 kg/h eines α,ω-Dihydroxypolydimethylsiloxans einer Viskosität von ca. 120 mPa*s bei 25 °C, 600 ml/h einer 2,5 Gew.% Phosphornitridchlorid und 0,1 Gew.% Ammoniumlaurylsulfat in Ethylacetat enthaltenden Katalysatorlösung und 80 kg/h eines α,ω-bis-Vinyldimethylsiloxypolydimethylsiloxans einer Viskosität von 180 mPa*s bei 23 °C eingespeist. Die Reaktionstemperatur betrug 160 °C, der Druck weniger als 5 hPa. Nach einer Verweilzeit von ca. 3 min wurde der Katalysator durch die kontinuierliche Zugabe von 600 ml/h 1,1′-Divinyl-1,1,1′,1′-tetramethyldisilazan desaktiviert. Erhalten wurde ein α,ω-bis-Vinyldimethylsiloxypolydimethylsiloxan mit einer Viskositat von ca. 20 000 mPa*s bei 23 °C.

### 3. Diskontinuierliche Herstellung von α,ω-bis-Trimethylsiloxypolydimethylsiloxanen

In einem Kolben mit Rührer wurden 1 000 g α,ω-Dihydroxypolydimethylsiloxan einer Viskosität von 120 mPa*s bei 23 °C und 10,6 g Hexamethyldisiloxan unter Rühren bei vermindertem Druck auf 80-100 °C erhitzt. Im Abstand von 10 min wurden zu dieser Mischung drei Portionen von je 0,2 ml Katalysatorlösung (15 Gew.% Phosphornitridchlorid, 0,6 Gew.% Hexadecyltrimethylammoniumchlorid in Ethylacetat) gegeben. Dreißig min nach der letzten Zugabe an Katalysator wurde mit 10 ml Hexamethyldisilazan desaktiviert. Erhalten wurde ein α,ω-bis -Trimethylsiloxypolydimethylsiloxan einer Viskosität von 1000 mPa*s bei 23 °C.

## Patentansprüche (Patentansprüche für folgende(n) Vertragsstaat(en): FR, NL, GB, IT, AT, CH, DE)

1. Zusammensetzungen enthaltend durch Umsetzung von zwei Mol Phosphorpentachlorid mit einem Mol Ammoniumchlorid erhältliche Phosphornitridchloride, **dadurch gekennzeichnet,** daß sie als Lösungsmittel zumindestens 95 %, jeweils bezogen auf das Gewicht der Lösungsmittel, halogenfreie organische Lösungsmittel, als Lösungsvermittler Tenside, die ausgewählt werden aus quaternären Ammoniumverbindungen, in denen das Stickstoffatom der Ammoniumgruppe an Alkyl-, Alkaryl-, Alkylenhydroxy-, Alkylenalkoxy- und Alkylenaminogruppen mit jeweils bis zu 24 C-Atomen gebunden ist, Sulfonaten, Sulfaten, Phosphonaten und Phosphaten, und gegebenenfalls geringe Mengen an Wasser enthalten.

2. Verfahren zur Herstellung von Zusammensetzungen gemäß Anspruch 1, wobei zuerst Lösungsvermittler und Lösungsmittel miteinander vermischt werden und dieser Mischung anschließend Phosphornitridchlorid zugegeben wird.

3. Verwendung der Zusammensetzungen gemäß Anspruch 1 zur Kondensation und/oder Äguilibrierung von Organo(poly)siloxan.

## Patentansprüche (Patentansprüche für folgende(n) Vertragsstaat(en): ES)

1. Verfahren zur Herstellung von Zusammensetzungen enthaltend durch Umsetzung von zwei Mol Phosphorpentachlorid mit einem Mol Ammoniumchlorid erhältliche Phosphornitridchloride, als Lösungsmittel zu mindestens 95 %, jeweils bezogen auf das Gewicht der Lösungsmittel, halogenfreie organische Lösungsmittel, als Lösungsvermittler Tenside, die ausgewählt werden aus quaternären Ammoniumverbindungen, in denen das Stickstoffatom der Ammoniumgruppe an Alkyl-, Alkaryl-, Alkylenhydroxy-, Alkylenalkoxy- und Alkylenaminogruppen mit jeweils bis zu 24 C-Atomen gebunden ist, Sulfonaten, Sulfaten, Phosphonaten und Phosphaten, und gegebenenfalls geringe Mengen an Wasser, **dadurch gekennzeichnet,** daß man Lösungsmittel, Lösungsvermittler und Phosphornitridchloride vermischt.

2. Verwendung der gemäß Anspruch 1 hergestellten Zusammensetzungen Kondensation und/oder Äquilibrierung von Organo(poly)siloxan.

## Claims (Claims for the following Contracting State(s): FR, NL, GB, IT, AT, CH, DE, LI)

1. Compositions containing phosphonitrile chlorides obtainable by reaction of two mol of phosphorus pentachloride with one mol of ammonium chloride, characterised in that as solvents they contain at least 95%, in each case relative to the weight of the solvents, of halogen-free organic solvents, as solubilisers surfactants which are selected from quaternary ammonium compounds in which the nitrogen atom of the ammonium group is bonded to alkyl, alkaryl, alkylenehydroxy, alkylenealkoxy and alkyleneamino groups each having up to 24 C atoms, sulphonates, sulphates, phosphonates and phosphates, and optionally small amounts of water.

2. Process for the preparation of compositions according to Claim 1, in which solubiliser and solvent are first mixed with one another and phosphonitrile chloride is then added to this mixture.

3. Use of compositions according to Claim 1, for the condensation and/or equilibration of organo(poly)siloxane.

## Claims (Claims for the following Contracting State(s): ES)

1. Process for the preparation of compositions containing phosphonitrile chlorides obtainable by reaction of two mol of phosphorus pentachloride with one mol of ammonium chloride, as solvents at least 95%, in each case relative to the weight of the solvents, halogen-free organic solvents, as solubilisers surfactants which are selected from quaternary ammonium compounds, in which the nitrogen atom of the ammonium group is bonded to alkyl, alkaryl, alkylenehydroxy, alkylenealkoxy and alkyleneamino groups each having up to 24 C atoms, sulphonates, sulphates, phosphonates and phosphates, and optionally small amounts of water, characterised in that solvents, solubiliser and phosphonitrile chlorides are mixed.

2. Use of the compositions prepared according to Claim 1 for the condensation and/or equilibration of organo(poly)siloxane.

## Revendications (Revendications pour l'(les) Etat(s) contractant(s) suivant(s): AT, CH, DE, FR, GB, LI, NL)

1. Compositions contenant des chlorures-nitrures de phosphore pouvant être obtenus par réaction de deux moi de pentachlorure de phosphore avec une mol de chlorure d'ammonium, qui sont caractérisées en ce qu'elles contiennent comme solvant au moins 95%, les proportions de solvant indiquées étant toujours des proportions pondérales, de solvants organiques non-halogénés, des agents surfactifs comme adjuvants de dissolution pris parmi des composés d'ammoniums quaternaires dont l'atome de carbone du groupe ammonium est lié à des groupes alkyles, alcaryles, alkylène-hydroxy, alkylène-alcoxy et/ou alkylène-amino pouvant avoir chacun jusqu'à 24 atomes de carbone, des sulfonates, sulfates, phosphonates et phosphates, avec éventuellement de faibles proportions d'eau.

2. Procédé de préparation de compositions selon la revendication 1 dans lequel on mélange d'abord l'adjuvant de dissolution avec le solvant puis on ajoute au mélange le chlorure-nitrure de phosphore.

3. Emploi des compositions de la revendication 1 pour la condensation et/ou l'équilibrage d'organo(poly)siloxanes.

## Revendications (Revendications pour l'(les) Etat(s) contractant(s) suivant(s): ES)

1. Procédé de fabrication de compositions comprenant des chlorures-nitrures de phosphore pouvant être obtenus par réaction de deux mol de pentachlorure de phosphore avec une mol de chlorure d'ammonium, comme solvant au moins 95%, les proportions de solvant indiquées étant toujours des proportions pondérales, de solvants organiques non-halogénés, des agents surfactifs comme adjuvants de dissolution pris parmi des composés d'ammoniums quaternaires dont l'atome de carbone du groupe ammonium est lié à des groupes alkyles, alcaryles, alkylène-hydroxy, alkylène-alcoxy et/ou alkylène-amino pouvant avoir chacun jusqu'à 24 atomes de carbone, des sulfonates, sulfates, phosphonates et phosphates, avec éventuellement de faibles proportions d'eau, procédé caractérisé en ce que l'on mélange le solvant avec l'adjuvant de dissolution et le chlorure-nitrure de phosphore ou plusieurs de ceux-ci.

2. Emploi des compositions qui ont été obtenues selon la revendication 1 pour la condensation et/ou l'équilibrage d'organo(poly)siloxanes.
